# EUROPÄISCHE PATENTSCHRIFT

(11) **EP 2 305 518 B1**
(45) Veröffentlichungstag und Bekanntmachung des Hinweises auf die Patenterteilung: **04.07.2012**
(21) Anmeldenummer: 10007039.0
(22) Anmeldetag: 08.07.2010
(51) Int. Cl.: B62D 25/16

(54) **Vorrichtung für die Befestigung einer Stoßfängerverkleidung**
Device for fixing a bumper fascia
Dispositif pour la fixation d'une peau de pare-chocs

(30) Priorität: 01.10.2009 DE 202009013149 U
(43) Veröffentlichungstag der Anmeldung: 06.04.2011
(73) Patentinhaber: SMP Deutschland GmbH, 79268 Bötzingen (DE)
(72) Erfinder: Ruder, Jürgen, 85092 Kösching (DE)
(74) Vertreter: Neunert, Peter Andreas

(56) Entgegenhaltungen:
- EP-A1- 2 072 342
- DE-U1-202004 020 237
- FR-A1- 2 919 848

## Beschreibung

Die vorliegende Erfindung betrifft eine Vorrichtung für die Befestigung einer Stoßfängerverkleidung an einer Kraftfahrzeugkarosserie, wobei die Vorrichtung einen Grundkörper, eine Verschlussplatte und einen Sicherungsstift umfasst, wobei der Grundkörper mit einer auf seiner Rückseite befindlichen Befestigungsfläche an einer Fahrzeugkarosserie angeordnet ist und mit der Verschlussplatte und dem Sicherungsstift zur Befestigung der Stoßfängerverkleidung zusammenwirkt.

Ein gattungsgemäßes Montagesystem für Stoßfänger ist beispielsweise in der DE 20 2008 001 814 U1 beschrieben, wobei eine als C-Schiene ausgebildete Halteleiste an einem Befestigungsrand eines ersten Bauteils fixiert ist und das zweite Bauteil einen Befestigungsrand mit Positionierdomen als Befestigungselement aufweist, wobei die Positionierdome in korrespondierende Befestigungsöffnungen im mit der Halteleiste verstärktem Befestigungsrand des ersten Bauteils eingeführt werden und mit Hilfe eines Fixierstiftes verriegelt werden.

Ein Nachteil dieser Anordnung besteht darin, dass die Bauteile selber bestimmte Voraussetzungen erfüllen müssen, damit das Montagesystem eingesetzt werden kann. So ist dieses System nur geeignet für Bauteile, die langgestreckte und laschenartige Anlageflächen zur Ausbildung der Verbindung aufweisen.

In der FR 2 919 848 A1 wird ein gattungsgemäßes Befestigungssystem beschrieben, wobei zwei benachbarte Karosserieteile direkt miteinander verbunden werden.

Es besteht weiterhin das Problem, ein Befestigungssystem insbesondere für Stoßfängerverkleidungen zur Verfügung zu stellen, das eine einfache und schnelle Montage erlaubt, wobei das Befestigungssystem an die Geometrie des Bauteils keine besonderen Anforderungen stellt, so dass das Befestigungssystem mit entsprechend geringeren Anpassungen universell bei einer Vielzahl von Fahrzeugmodellen eingesetzt werden kann.

Gelöst wird die Aufgabe mit einer Befestigungsvorrichtung mit den Merkmalen des Anspruchs 1. Vorteilhafte Ausgestaltungen und Weiterentwicklungen sind Gegenstand der untergeordneten Ansprüche.

Die erfindungsgemäße Vorrichtung für die Befestigung einer Stoßfängerverkleidung an einer Fahrzeugkarosserie umfasst einen Grundkörper, der auf seiner Rückseite eine Befestigungsfläche zur Befestigung an einer Karosserie aufweist.

Auf seiner Vorderseite besitzt der Grundkörper mindestens zwei koaxial zueinander und senkrecht zur Befestigungsfläche angeordnete Sicherungsösen. Die Vorderseite ist gleichzeitig so konzipiert, dass auf ihr eine passende Verschlussplatte angeordnet werden kann, die dann mit einem Sicherungsstift, der durch die beiden oben genannten Sicherungsösen eingesteckt wird, verriegelt werden kann.

Grundkörper und Verschlussplatte sind als separate Bauteile ausgeführt, während der Sicherungsstift bei einer vorteilhaften Ausgestaltung der vorliegenden Erfindung entweder mit dem Grundkörper oder auch mit der Verschlussplatte so verbunden ist, dass er zur Montage leicht von Hand von dem entsprechenden Bauteil abtrennbar ist. Da erfindungsgemäß sämtliche Bauteile aus einem thermoplastischen Kunststoff bestehen und über ein Spritzgießverfahren hergestellt werden, kann der Sicherungsstift problemlos entweder dem Grundkörper oder der Verschlussplatte über eine Sollbruchstelle oder einen Kunststofffaden direkt angespritzt werden. Dies hat den Vorteil, dass der Stift bei der Montage direkt zur Hand ist und nicht verloren oder verwechselt werden kann. Darüber hinaus kann auf diese Weise weitgehend ausgeschlossen werden, dass die Montage des Sicherungsstiftes vergessen wird.

Der Grundkörper ist so an der Fahrzeugkarosserie befestigt, dass im Montagezustande ein Flansch der Stoßfängerverkleidung zwischen dem Grundkörper und der Verschlussplatte angeordnet ist und durch die Verschlussplatte auf dem Grundkörper befestigt wird, wobei die Befestigungsanordnung dann anschließend durch das Einstecken des Sicherungsstiftes in die Sicherungsösen verriegelt wird.

Neben der Grundplatte kann auch die Verschlussplatte Einrichtungen zur Aufnahme des Sicherungsstiftes, wie z.B. Sicherungsösen oder andere Aufnahmeeinrichtungen, aufweisen.

Eine vorteilhafte Ausführungsform der vorliegenden Erfindung für die Montage sieht vor, dass die Verschlussplatte auf den Flansch der Stoßfängerverkleidung vormontiert wird und anschließend zusammen mit dem Flansch auf den Grundkörper geklippst wird. Danach wird dann die gesamte Befestigung durch den Sicherungsstift verriegelt.

Die Anordnung ist so konzipiert, dass die Stoßfängerverkleidung entweder von vorne oder von hinten, je nachdem ob es sich um ein Heckstoßfänger oder einen Frontstoßfänger handelt, durch einfaches Aufstecken auf den Grundköper montiert werden kann. Dabei sieht das Konzept selbstverständlich entsprechende Maßnahmen vor, die erlauben, dass die Befestigungsvorrichtung nach der Vormontage für das Einsetzen des Sicherungsstiftes weiterhin von außen zugänglich ist. Dies kann beispielsweise problemlos dadurch erreicht werden, dass die Befestigungsvorrichtung im Bereich von Lampenöffnungen angeordnet ist, wobei die Lampen dann erst nach der Montage der Stoßfängerverkleidung montiert werden.

Der besondere Vorteil der erfindungsgemäßen Befestigungsanordnung ist darin zu sehen, dass das Befestigungsprinzip universell einsetzbar ist und mit leichten Abänderungen den unterschiedlichen Fahrzeugmodellen angepasst werden kann. Dadurch dass der Grundkörper und die Verschlussplatte der Befestigungsvorrichtung als separate Bauteile ausgebildet sind, kann die Verschlussplatte schon auf dem Flansch der Stoßfängerverkleidung vormontiert werden, wodurch die Montage insgesamt enorm erleichtert wird. Auf diese Weise kann die Montage und die Demontage der Stoßfängerverkleidung mit einfachen Handgriffen, ohne Nutzung von Zusatzwerkzeug durchgeführt werden.

Wie bereits eingangs erwähnt, ist vorgesehen, dass die Bauteile aus thermoplastischen Kunststoff durch Spritzgießen hergestellt werden, wobei die üblichen thermoplastischen Kunststoffe aus der Gruppe Polypropylen (PP), Polyethylen (PE), Polybutylenterephthalat (PBT), Polyamid (PA), Polystyrol (PS), Polycarbonat (PC), Polymethylmethacrylat (PMMA), AcrylnitrilButadien-Styrol (ABS), Acrylnitril-Butadien-Styrol-Polycarbonat-Copolymerisat (ABS-PC) oder Polyoxymethylen (POM) eingesetzt werden können. Selbstverständlich ist es auch möglich, diese Bauteile mit Fasern zu verstärken, wobei Glasfasern, Kohlefasern oder andere Verstärkungsmaterialien eingesetzt werden können.

Im Folgenden wird die vorliegende Erfindung anhand von Abbildungen ausführlich erläutert.

Dabei zeigen:
- Figur 1: ein Schnittbild der Befestigungsanordnung, wobei der Schnitt in Fahrtrichtung vorgenommen wurde (Y- Schnitt);
- Figur 2: ein Schnittbild der Befestigungsanordnung in der Draufsicht (Z-Schnitt / Ebene A-A); und
- Figur 3: ein schnittbild der Befestigungsanordnung in der Draufsicht (Z-Schnitt / Ebene B-B).

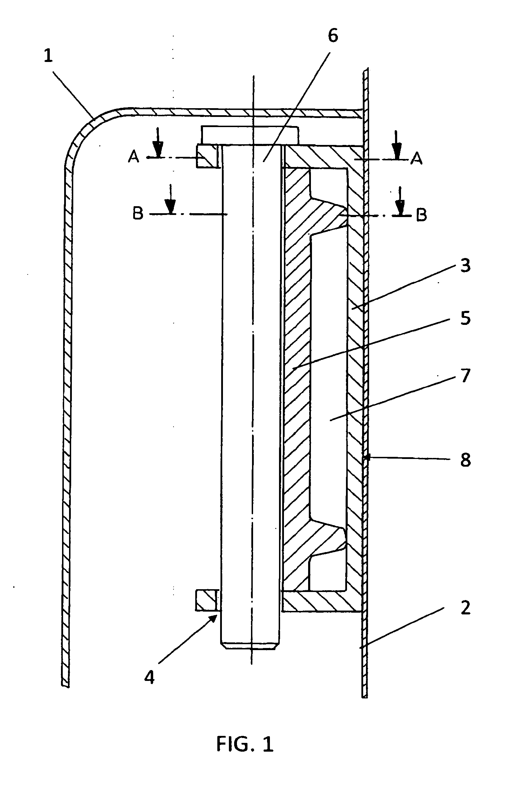

In der Schnittdarstellung in Figur 1 (Y-Schnitt) ist die Befestigungsvorrichtung für die Stoßfängerverkleidung 1 im Montagezustand zu sehen. Dabei ist der Grundkörper 3 mit seiner Rückseite 8 an der Fahrzeugkarosserie 2 befestigt. Zwischen Grundkörper 3 und Verschlussplatte 5 ist der Flansch 7 der Stoßfängerverkleidung 1 eingeklemmt und die gesamte Stoßfängerverkleidung 1 wird mit der Verschlussplatte 5 auf dem Grundkörper 3 fixiert. Endgültig verriegelt wird diese Befestigungsvorrichtung mit Hilfe des Sicherungsstiftes 6, der durch zwei Sicherungsösen 4, die auf der Vorderseite des Grundkörpers angeordnet sind und senkrecht zur Befestigungsfläche des Grundkörpers 3 in Fahrtrichtung hervorstehen, eingesteckt ist.

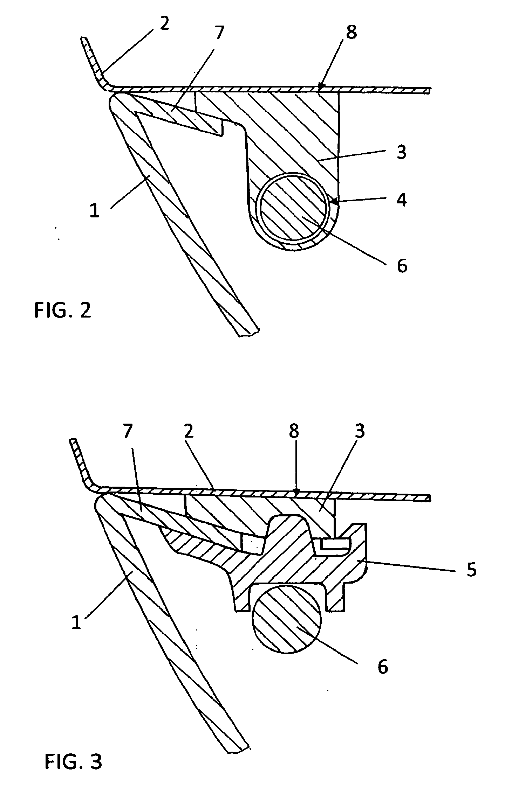

Figur 2 zeigt die erfindungsgemäße Befestigungsanordnung in der Draufsicht ebenfalls als Schnittdarstellung in der Schnittebene A-A aus Figur 1, wobei der Grundkörper 3 mit seiner Rückseite 8 direkt an der Fahrzeugkarosserie 2 angeordnet ist. Der Flansch 7 der Stoßfängerverkleidung 1 liegt an dem Grundkörper 3 an. Der Sicherungsstift 6 ist durch die Sicherungsöse 4 gesteckt und sichert die gesamte Befestigungsanordnung.

Figur 3 zeigt die erfindungsgemäße Befestigungsanordnung in der Draufsicht ebenfalls als Schnittdarstellung in der Schnittebene B-B aus Figur 1, wobei der Grundkörper 3 wieder mit seiner Rückseite 8 direkt an der Fahrzeugkarosserie 2 angeordnet ist. Der Flansch 7 der Stoßfängerverkleidung 1 ist zwischen der Grundplatte 3 und der Verschlussplatte 5 eingeklemmt. Aus dieser Darstellung kann man entnehmen, dass es besonders vorteilhaft sein kann, wenn die Verschlussplatte 5 vor der Montage der Stoßfängerverkleidung 1 bereits auf dem Flansch 7 der Stoßfängerverkleidung 1 vormontiert ist und dann einfach auf den Grundkörper 3 aufgesteckt wird. Gesichert ist die Verschlussplatte 5 durch den Sicherungsstift 6.

### Bezugszeichenliste

- 1: Stoßfängerverkleidung
- 2: Fahrzeugkarosserie
- 3: Grundkörper
- 4: Sicherungsöse
- 5: Verschlussplatte
- 6: Sicherungsstift
- 7: Flansch
- 8: Rückseite (Grundkörper)

## Patentansprüche

1. Vorrichtung auf Basis eines thermoplastischen Kunststoffes für die Befestigung einer Stoßfängerverkleidung (1) an einer Kraftfahrzeugkarosserie (2) mit
- einem Grundkörper (3), der auf seiner Rückseite (8) eine Befestigungsfläche (8) zur Befestigung an der Fahrzeugkarosserie (2) und auf seiner Vorderseite mindestens zwei koaxial zueinander und senkrecht zur Befestigungsfläche (8) angeordnete Sicherungsösen (4) aufweist,
- einer zu der Vorderseite des Grundkörpers (3) korrespondierenden Verschlussplatte (5) und
- einem zur Sicherung der Verschlussplatte (5) vorgesehenen Sicherungsstift (6),
wobei der Grundkörper (3) und die Verschlussplatte (5) als separate Bauteile ausgeführt sind und der Sicherungsstift (6) zum Verriegeln der Verschlussplatte (5) durch Einstecken in die Sicherungsösen (4) vorgesehen ist, **dadurch gekennzeichnet, dass** im Montagezustand ein Flansch (7) der Stoßfängerverkleidung (1) zwischen dem Grundkörper (3) und der Verschlussplatte (5) angeordnet ist, wobei die Verschlussplatte (5) auf den Flansch (7) der Stoßfängerverkleidung (1) vormontierbar ist und zusammen mit dem Flansch (7) an dem Grundkörper (3) fixierbar ist.

2. Vorrichtung nach Anspruch 1,
**dadurch gekennzeichnet, dass** der Sicherungsstift (6) über eine Sollbruchstelle oder einen Kunststofffaden mit dem Grundkörper (3) oder der Verschlussplatte (5) verbunden und zur Montage von Hand leicht abtrennbar ist.

3. Vorrichtung nach einem der Ansprüche 1 bis 2,
**dadurch gekennzeichnet, dass** im Montagezustand die Verschlussplatte (5) durch den durch die Sicherungsösen (4) eingeführten Sicherungsstift (6) verriegelt ist.

4. Vorrichtung nach einem der Ansprüche 1 bis 3,
**dadurch gekennzeichnet, dass** die Verschlussplatte (5) Einrichtungen zur Aufnahme des Sicherungsstiftes (6) aufweist.

## Claims

1. An apparatus based upon a thermoplastic plastics material for fastening a bumper covering (1) to a motor vehicle body (2) with
- a base body (3) which has on its rear side (8) a fastening face (8) for fastening to the motor vehicle body (2) and on its front side at least two securing eyelets (4) arranged coaxially with each other and at a right angle to the fastening face (8),
- a closure plate (5) corresponding to the front side of the base body (3), and
- a securing pin (6) provided in order to secure the closure plate (5),
wherein the base body (3) and the closure plate (5) are designed in the form of separate components, and the securing pin (6) is provided for locking the closure plate (5) by insertion into the securing eyelets (4),
**characterized in that** in the assembled state a flange (7) of the bumper covering (1) is arranged between the base body (3) and the closure plate (5), wherein the closure plate (5) is capable of being pre-assembled on the flange (7) of the bumper covering (1) and is capable of being fixed together with the flange (7) to the base body (3).

2. An apparatus according to claim 1, **characterized in that** the securing pin (6) is connected to the base body (3) or the closure plate (5) by way of a nominal fracture point or a plastic thread and is capable of being easily separated for assembly by hand.

3. An apparatus according to one of claims 1 to 2, **characterized in that** in the assembled state the closure plate (5) is locked by the securing pin (6) inserted through the securing eyelets (4).

4. An apparatus according to any one of claims 1 to 3, **characterized in that** the closure plate (5) has devices for receiving the securing pin (6).

## Revendications

1. Dispositif à base d'un matériau synthétique thermoplastique pour la fixation d'une garniture de pare-choc (1) sur la carrosserie d'un véhicule (2) comprenant :
- un corps de base (3) comportant, sur sa face arrière (8) une surface de fixation (8) permettant sa fixation à la carrosserie du véhicule (2), et sur sa face avant au moins deux oeillets de sécurité (4) disposés co-axialement l'un par rapport à l'autre et perpendiculairement à la surface de fixation (8),
- une plaque de fermeture (5) correspondant à la face avant du corps de base (3), et
- une goupille de sécurité (6) prévue pour protéger la plaque de fermeture (5),
- le corps de base (3) et la plaque de fermeture (5) étant réalisés sous la forme d'éléments séparés et la goupille de sécurité (6) étant prévue pour bloquer la plaque de fermeture (5) par enfichage dans les oeillets de sécurité (4),
**caractérisé en ce qu'**
à l'état de montage, une bride (7) de la garniture de pare-choc (1) est positionnée entre le corps de base (3) et la plaque de fermeture (5), la plaque de fermeture (5) pouvant être préalablement montée sur la bride (7) de la garniture de pare-choc (1) et être fixée avec la bride (7) sur le corps de base (3).

2. Dispositif conforme à la revendication 1,
**caractérisé en ce que**
la goupille de sécurité (6) est reliée au corps de base (3) ou à la plaque de fermeture (5) par un point de rupture de consigne ou un fil en matériau synthétique et peut être facilement séparée manuellement pour le montage.

3. Dispositif conforme à l'une des revendications 1 et 2,
**caractérisé en ce qu'**
à l'état de montage la plaque de fermeture (5) est bloquée par la goupille de sécurité (6) introduite dans les oeillets de sécurité (4).

4. Dispositif conforme à l'une des revendications 1 à 3,
**caractérisé en ce que**
la plaque de fermeture (5) est équipée d'éléments de réception de la goupille de sécurité (6).
